# EUROPÄISCHE PATENTSCHRIFT

(11) **EP 0 771 706 B1**
(45) Veröffentlichungstag und Bekanntmachung des Hinweises auf die Patenterteilung: **11.04.2001**
(21) Anmeldenummer: 96116386.2
(22) Anmeldetag: 12.10.1996
(51) Int. Cl.: B60T 7/08

(54) **Betätigungseinrichtung für eine Handbremse**
Actuating device for a handbrake
Dispositif d'actionnement pour un frein à main

(30) Priorität: 10.01.1996 DE 19600582; 03.11.1995 DE 19540941
(43) Veröffentlichungstag der Anmeldung: 07.05.1997
(73) Patentinhaber: ED. Scharwächter GmbH, 42855 Remscheid (DE)
(72) Erfinder: Borchers, Wolf-Dieter, 42857 Remscheid (DE)
(74) Vertreter: Sparing, Rolf Klaus

(56) Entgegenhaltungen:
- EP-A- 0 351 131
- GB-A- 2 059 022
- US-A- 2 228 570
- US-A- 2 262 005

## Beschreibung

Die Erfindung betrifft eine Betätigungseinrichtung für eine Handbremse nach dem Oberbegriff des Patentanspruchs 1.

Bei den aus der Praxis bekannten, mittels eines Handbremshebels betätigbaren Handbremsen für Kraftfahrzeuge ist der Handbremshebel um eine Achse schwenkbar an einem an der Fahrzeugkarosserie feststehend befestigten, aus einem Blechpressteil gebildeten Brückenträger angelenkt und, soweit es sich nicht um eine selbstverstärkende Handbremse handelt, drehsicher mit einem eine begrenzte Länge des Bremsseiles aufnehmenden Teil, insbesondere mit einer Seilscheibe verbunden. Zur Feststellung der angezogenen Handbremse in ihrer vollen oder teilweisen Wirkstellung und gegebenenfalls auch in der der gelösten Handbremse entsprechenden Lösestellung ist dem Handbremshebel dabei noch eine Feststelleinrichtung zugeordnet, die üblicherweise mittels eines im Handgriffbereich des Handbremshebels angeordneten federbelasteten Druckknopfes auslösbar ist und aus einem am feststehenden Brückenträger angeordneten, konzentrisch zur Anlenkachse des Handbremshebels gekrümmten Zahnsegment sowie einer mit diesem zusammenwirkenden schwenkbar am Körper des Handbremshebels gelagerten Feststellklinke besteht, wobei der Druckknopf vermittels eines innerhalb des Handbremshebels angeordneten Gestänges, insbesondere einer Druckstange mit der Feststellklinke gekoppelt ist. Aus dem Umstand, daß bei einer solchen Ausbildung der Handbremse das den Druckknopf mit der Feststellklinke verbindende Gestänge in Löserichtung mit einer verhältnismäßig hohen Federlast beaufschlagt sein muß, um eine durch ein mögliches Verklemmen des Gestänges oder des mit ihm verbundenen Druckknopfes gegenüber dem Körper des Handbremshebels hervorgerufene Störung beim Lösen der Handbremse auszuschließen, resultiert bei den bekannten Handbremsen der hier in Rede stehenden Bauart naturgemäß, daß auch die Feststellklinke in Richtung ihrer Sperrstellung ständig mit einer entsprechend hohen Federlast beaufschlagt ist, woraus beim Betätigen der Handbremse ein höchst unerwünschtes geräuschvolles Ratschen der Klinke über die Verzahnung des Zahnsegmentes resultiert. Zudem tritt bei Seilzug-Handbremsen der eingangs genannten Bauart im Laufe der Betriebsdauer des Kraftfahrzeuges neben einem Verschleiß der Bremsbeläge auch eine gewisse Längung des Bremsseiles auf, wodurch sich am Handbremshebel ein im Laufe der Zeit immer größer werdender Leergang ergibt, über dessen Verlauf hin durch die Betätigung des Handbremshebels nur die eingetretene Seillängung und/oder der eingetretene Bremsbelagverschleiß ausgeglichen werden, was naturgemäß auch eine Erhöhung der Geräuschentwicklung beim Betätigen der Handbremse zur Folge hat.

EP-A-0 351 131 beschreibt eine selbstnachstellende Handfeststellbremse, bei der eine einteilige Feststellklinke für den angezogenen Zustand der Handbremse und eine weitere einteilige Klinke zum Nachstellen des Seilzuges auf demselben Schaft an einem Handbremshebel angelenkt sind, wobei die Feststellklinke durch eine Feder in Eingriffsstellung mit einer verzahnten Fläche des mit der Fahrzeugkarosserie festen Brückenträgers vorgespannt ist und an ihrem der verzahnten Fläche abgewandten Ende mit einem in dem Handbremshebel integrierten federbelasteten Betätigungsgestänge verbunden ist, wobei das Betätigen eines Knopfes an dem Handbremshebel über das Betätigungsgestänge die Feststellklinke außer Eingriff mit der verzahnten Fläche gelangen läßt.

GB-A-2 059 022 beschreibt eine Fußfeststellbremse, die über einen relativ zu einem mit der Fahrzeugkarosserie festen Brückenträger mit einer verzahnten Fläche verschwenkbaren Fußbremshebel mit daran angelenktem Pedal den Seilzug der Bremse dadurch festsetzt, daß eine an dem Fußbremshebel angelenkte Klinke mit der verzahnten Fläche zur Verriegelung des angezogenen Bremsseils in Eingriff gelangt, wobei zum Betätigen der Klinke in Richtung auf eine Freigabe des Eingriffs diese an ihrem der verzahnten Fläche abgewandten Ende über einen an diesem Ende angelenkten Hebel betätigt wird, wobei der Hebel an seiner der Anlenkung zur Klinke abgewandten Ende mit einer an dem Pedal gelagerten Stange gelenkig verbunden ist und ferner durch eine Feder entgegen der Betätigungsrichtung des Pedals gehalten ist derart, daß die Klinke nur mit einer gleichzeitig in Richtung der Auslösung der Klinke erfolgenden Kippbewegung, die die Stange betätigt, und einer in Richtung der Verriegelung der Klinke erfolgenden Drückbewegung des Pedals, die den Fußbremshebels betätigt, mit der verzahnten Fläche außer Eingriff gebracht werden kann.

Es ist die Aufgabe der Erfindung, eine Betätigungseinrichtung nach dem Oberbegriff des Anspruchs 1 anzugeben, die bei zuverlässiger Festlegung der Bremse eine geringe Geräuschentwicklung beim Anziehen und/oder beim Lösen aufweist.

Diese Aufgabe wird bei der eingangs genannten Betätigungseinrichtung erfindungsgemäß mit den kennzeichnenden Merkmalen des Patentanspruchs 1 gelöst.

Durch diese Unterteilung der Feststellklinke in zwei relativ zueinander bewegliche Hälften wird eine Entkoppelung der Druckstange und des mit dem feststehenden Zahnsegment zusammenwirkenden Feststellklinkenteiles in einer Schwenkrichtung der Feststellklinke erreicht, woraus die Möglichkeit resultiert, einerseits den Druckknopf und die Druckstange der Betätigungseinrichtung und andererseits die mit dem feststehenden Zahnsegment zusammenwirkende Feststellklinkenhälfte jeweils mit einer den jeweiligen Verhältnissen angepassten Federlast zu beaufschlagen. Die Bemessung der anzuwendenden Federlasten erfolgt erfindungsgemäß insbesondere in der Weise, daß die Druckstange und zusammen mit dieser der Druckknopf mit einer hinreichend starken Feder beaufschlagt ist, um ein Klemmen der Druckstange innerhalb des Handbremshebels sicher auszuschließen. Zugleich kann die mit dem feststehenden Zahnsegment zusammenwirkende Feststellklinkenhälte aber mit einer verhältnismäßig schwachen Federlast beaufschlagt sein, derart, daß lediglich sichergestellt ist, daß die Feststellklinkenhälfte bei angezogener Handbremse mit dem Zahnsegment im Eingriff bleibt.

Die Erfindung kann im Einzelnen auf verschiedene Weisen ausgestaltet werden.
Nach einer ersten bevorzugten Ausgestaltungsform ist vorgesehen, daß eine erste Feststellklinkenhälfte vermittels einer zu ihrer Anlenkung am Handbremshebel achsparallelen Gelenkausbildung bleibend mit einer als einteiliges geradliniges Gestängeteil ausgebildeten, innerhalb des Handbremshebels axial verschieblich geführten sowie starr mit dem Druckknopf verbundenen und ständig mit der Last einer am Handbremshebel abgestützten und in Löserichtung wirkenden Druckfeder beaufschlagten Schubstange gekoppelt ist. Zugleich ist am freien Ende der zweiten Feststellklinkenhälfte ein Eingriffzahn ausgebildet, über welchen sie bei angezogener Handbremse unabhängig von der ersten Feststellklinkenhälfte lediglich unter der Wirkung einer eigenen Belastunsfeder mit dem feststehenden Zahnsegment zusammenwirkt bzw. im Eingriff gehalten ist. Die der zweiten Feststellklinkenhälfte zugeordnete Belastungsfeder ist dabei vorteilhaft durch eine gegen den Handbremshebel abgestützte und mit ihrer Windung konzentrisch zur Anlenkachse der beiden Feststellklinkenhälften anbgeordnete Schenkelfeder gebildet.
Es kann aber auch vorgesehen sein, daß die der zweiten Feststellklinkenhälfte zugeordnete Belastungsfeder durch eine am Handbremshebel abgestützte Blattfeder gebildert ist.

Für das Ausrücken der Handbremse mittels des Handbremshebels ist vorgesehen, daß die beiden Feststellklinkenhälften in einer, nämlich der dem Lösen der Handbremse zugeordneten Schwenkrichtung, vermittels eines an der ersten Feststellklinkenhälfte angeordneten Mitnehmers beim Betätigen des Druckknopfes und damit der Druckstange selbsttätig und starr miteinander koppelbar sind.
In einer zweckmäßigen Ausgestaltung kann dies dadurch erreicht werden, daß die erste Feststellklinkenhälfte als doppelarmiger Hebel ausgebildet und der an der ersten Feststellklinkenhälfte angeordnete Mitnehmer durch eine am freien Hebelarm der ersten Feststellklinkenhälfte angeordnete, parallel zu seiner Anlenkachse vorspringende Nase gebildet ist und daß zwecks Sicherung der gegenseitigen Eingriffslage beider Feststellklinkenhälften die zweite Feststellklinkenhälfte zugleich mit einer der Nase der ersten Feststellklinkenhälfte zugeordneten Rastausnehmung versehen ist. Die zweite Feststellklinkenhälfte ist dabei als einarmiger Hebel ausgebildet

In einer besonders zweckmäßigen Einzelausbildung ist weiter vorgesehen, daß die erste Feststellklinkenhälfte im Bereich ihrer Lagerung mit einer axial gerichteten, zur Anlenkachse konzentrischen Vertiefung versehen ist, während die zweite Feststellklinkenhälfte über einen zur Anlenkachse konzentrisch kreisrund gestalteten Kopfteil in dieser Vertiefung einliegend angeordnet ist.

In einer anderen Einzelausgestaltung kann aber auch vorgesehen sein, daß eine erste Feststellklinkenhälfte als doppelarmiger Hebel und eine zweite Feststellklinkenhälfte als einarmiger Hebel ausgebildet ist und die beiden Feststellklinkenhälften im Bereich ihrer Lagerung eine geringere Materialdicke aufweisen.

In einer weiteren abgewandelten Ausführungsform kann aber auch vorgesehen sein, daß die erste Feststellklinkenhälfte als einarmiger Hebel und die zweite Feststellklinkenhälfte als doppelarmiger Hebel ausgebildet sind, wobei ein an einer der Feststellklinkenhälften angeordnete Mitnehmer durch eine seiner allgemeinen Ebene gegenüber seitlich versetzt angeordnete Nase gebildet ist und mit einem an der anderen Feststellklinkenhälfte komplementär angeordneten Anschlag zusammenwirkt. Dabei kann der Anschlag entweder an der ersten Feststellklinkenhälfte im Bereich zwischen deren Anlenkung und deren mit dem Gestänge zusammenwirkenden Ende oder aber an der zweiten Feststellklinkenhälfte angeordnet sein. Die den anderen Teil der Mitnehmeranordnung bildende Nase ist in komplementärer Anordnung dann jeweils entweder an ersten oder der zweiten Feststellklinkenhälfte als Vorsprung ausgebildet.

Hinsichtlich der Einzelausgestaltung kann weiterhin vorgesehen sein, daß wenigstens die eine oder aber die beiden Feststellklinkenhälften durch Blechpressteile gebildet sind.

Alternativ hierzu kann aber auch vorgesehen sein, daß wenigstens die eine vorzugsweise aber die beiden Feststellklinkenhälften durch Formteile gebildet sind, wobei im Interesse einer weiteren Geräuschverminderung der Einsatz eines Kunststoffmaterials wenigstens für die Herstellung einer der beiden Feststellklinkenhälften in Betracht gezogen werden könnte.

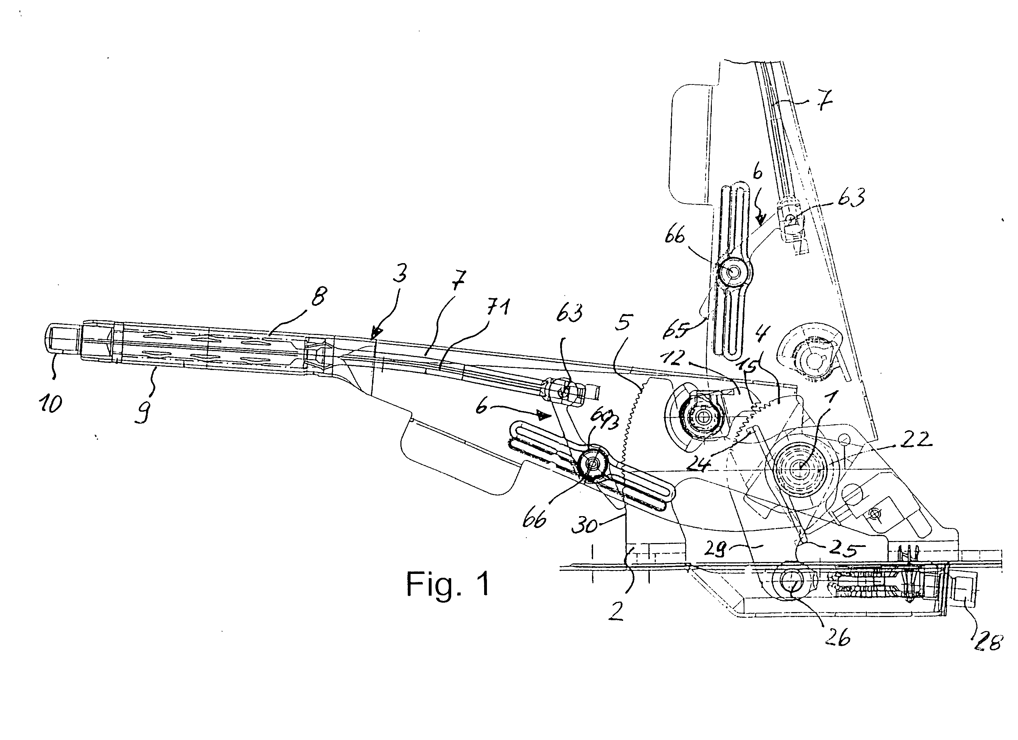

Die Erfindung ist in der nachfolgenden Beispielsbeschreibung anhand von in der Zeichnung dargestellten Ausführungsbeispielen im Einzelnen beschrieben.
In der Zeichnung zeigt die
- Figur 1: eine Seitenansicht einer erfindungsgemäßen Betätigungseinrichtung für eine Seilzug-Handbremse;

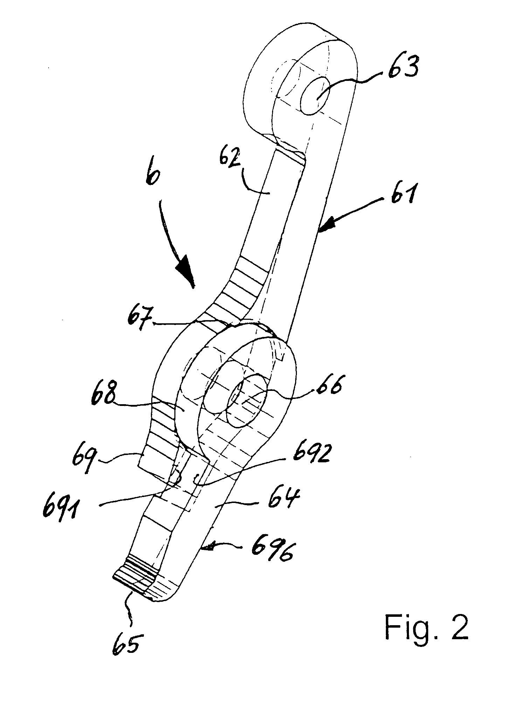

- Figur 2: eine schaubildliche Einzeldarstellung einer zweiteiligen Feststellklinke;
- Figur 3: eine schaubildliche Einzeldarstellung einer ersten abgewandelten Ausführungsform einer zweiteiligen Feststellklinke;
- Figur 4: eine schaubildliche Einzeldarstellung einer zweiten abgewandelten Ausführungsform einer zweiteiligen Feststellklinke.

Die Betätigungseinrichtung besteht im Wesentlichen aus einem um eine Schwenkachse 1 schwenkbar an einem aus einem Blechpressteil gebildeten und starr an der in der Zeichnung nicht besonders dargestellten Fahrzeugkarosserie befestigten Brückenträger 2 angelenkten Handbremshebel 3 und einer mit dem Handbremshebel 3 koppelbaren Seilscheibe 4. Zur Feststellung der Handbremse in ihrer angezogenen Stellung und gegebenenfalls auch in ihrer Lösestellung ist am Brückenträger 2 ein zur Anlenkachse 1 des Handbremshebels 3 konzentrisch ausgebildetes Zahnsegment 5 angeordnet, mit dem eine schwenkbar am Handbremshebel 3 angelenkte Feststellklinke 6 zusammenwirkt. Die Feststellklinke 6 kann vermittels eines innerhalb des Körpers des Handbremshebels 3 untergebrachten, hier aus einer Schub- bzw. Druckstange 71 bestehenden, durch eine Druckfeder 8 belasteten Gestänges 7 und eines im Bereich des Handgriffes 9 des Handbremshebels 3 angeordneten Druckknopfes 10 durch Drücken des Druckknopfes 10 mit dem Zahnsegment 5 außer Eingriff gebracht werden. Die Feststellklinke 6 ist zweiteilig ausgebildet und umfaßt eine erste, als doppelarmiger Hebel gestaltete Klinkenhälfte 61 die über ihren einen Hebelarm 62 vermittels einer Gelenkausbildung 63 an die innerhalb des Handbremshebels axial verschiebbar angeordnete und mit einem Druckknopf 10 gekoppelte Druckstange 71 angeschlossen ist und eine zweite als einarmiger Hebel ausgebildete Klinkenhälfte 64, welche an ihrem freien Ende mit einem Rastzahn 65 versehen ist, über welchen sie mit der Verzahnung des feststehenden Zahnsegmentes 5 zusammenwirkt. Die beiden Klinkenhälften 61 und 64 sind voneinander unabhängig um eine gemeinsame Achse 66 schwenkbar am Körper des Handbremshebels 3 angelenkt und in der dem Lösen der Handbremse zugeordneten Schwenkrichtung selbsttätig und starr miteinander koppelbar, in der Weise, daß die eine Klinkenhälfte 61 mit einer zur Anlenkachse 66 konzentrischen Ausnehmung 67 und die andere Klinkenhälfte 64 mit einem entsprechend verdickten Kopfteil 68 versehen ist und daß ferner einer am freien Hebelarm 69 der als doppelarmiger Hebel ausgebildeten Klinkenhälfte 61 ausgebildeten, zu ihrer Anlenkachse 66 parallel ausgerichteten Nase 691 eine entsprechende Eingriffs-bzw. Rastausnehmung 692 in der als einarmiger Hebel ausgebildeten Klinkenhälfte 64 zugeordnet ist. Die Druckstange 71 ist in axialer Richtung mit der Last einer gegen den Körper des Handbremshebels 3 abgestützten verhältnismäßig starken Druckfeder 8 belastet, während die mit dem Zahnsegment 5 zusammenwirkende, als einarmiger Hebel ausgebildete Klinkenhälfte 64 in Eingriffsrichtung mit der Last einer verhältnismäßig schwachen, am Körper des Handbremshebels 3 abgestützten Schenkelfeder 693 belastet ist, wobei die Windung der Schenkelfeder konzentrisch zur Anlenkachse 66 der beiden Klinkenhälften 61 und 64 angeordnet ist und die Schenkelfeder über ihren einen Federschenkel an der Rückenfläche 696 der als einarmiger Hebel ausgebildeten Klinkenhälfte 64 angreift. Am Handbremshebel 3 ist weiterhin um eine Achse schwenkbar eine Mitnehmerklinke 12 gelagert, die durch eine am Handbremshebel 3 abgestützte Schenkelfeder belastet ist und mit einer umfangsverzahnten Mitnehmerscheibe 4 zusammenwirkt. Die Mitnehmerklinke 12 ist als Kipphebel ausgebildet und weist Rastzähne 15 auf, über die sie in Mitnahmerichtung mit der Mitnehmerscheibe 4 zusammenwirkt. Die Rastzähne 15 der Mitnehmerklinke 12 sind zueinander konvergierend gestaltet. Die Mitnehmerscheibe 4 ist in Aufwickelrichtung durch eine Wickelfeder 22 belastet, die einerseits bei 24 an der Mitnehmerscheibe 4 befestigt und andererseits bei 25 gegen den die Drehachse der Mitnehmerscheibe 4 lagernden Brückenträger 2 abgestützt ist. In Richtung auf seine Lösestellung ist der Handbremshebel 3 durch eine nicht gezeigte Rückzugsfeder belastet. In Verbindung mit der Anordnung der Rückzugsfeder weist das Zahnsegment 5 des Brückenträgers 2 im Bereich der Lösestellung des Handbremshebels 3 eine Anzahl, im gezeigten Ausführungsbeispiel verblockter Zähne 30 auf, die die Klinke 6 unter der Wirkung der Rückzugsfeder überlaufen kann. Mit der Mitnehmerscheibe 4 ist das Bremsseil 28 bei 25 mittels einer üblichen Einhängeeinrichtung verbunden, wozu die Mitnehmerscheibe 4 eine entsprechende Auskragung aufweist.

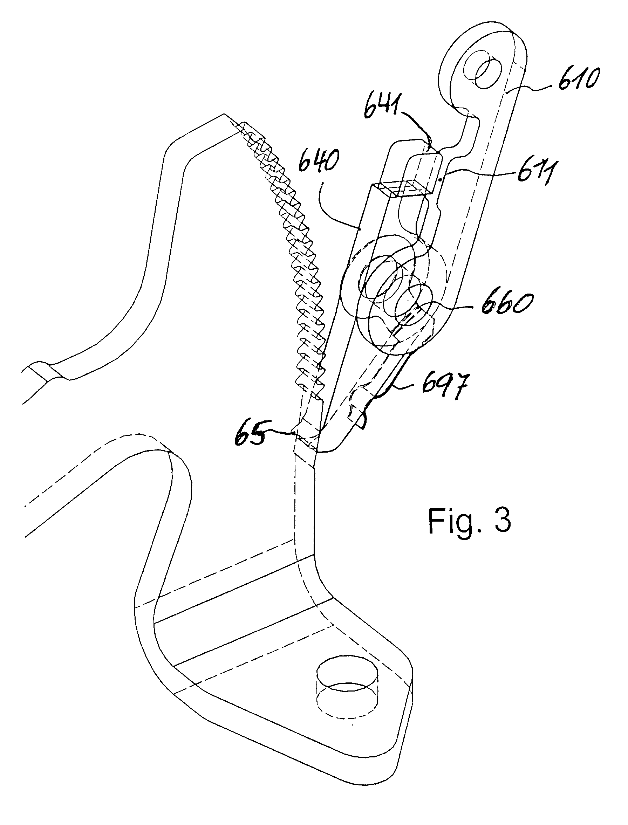

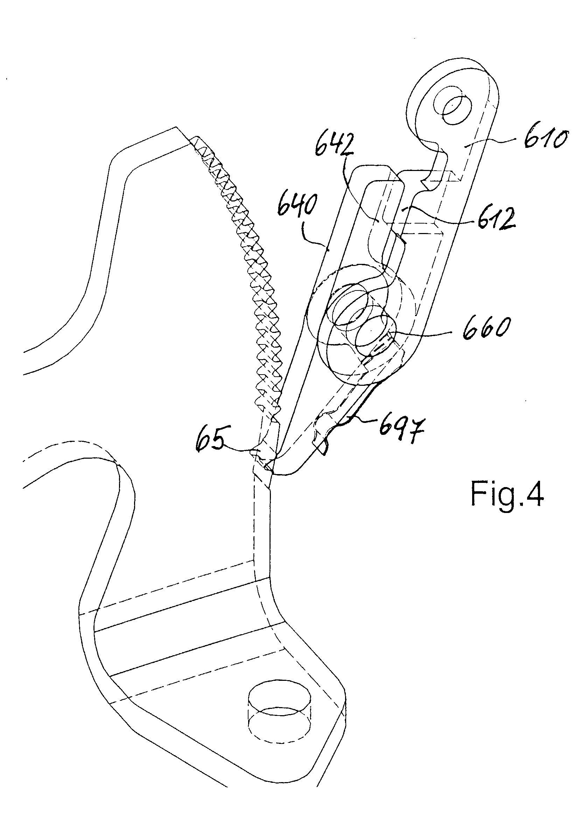

Bei der in den Figuren 3 und 4 gezeigten Ausführungsform ist vorgesehen, daß die erste Feststellklinkenhälfte 610 als einarmiger Hebel und die zweite Feststellklinkenhälfte 640 als doppelarmiger Hebel ausgebildet ist. Die beiden Klinkenhälften 610 und 640 sind voneinander unabhängig um eine gemeinsame Achse 660 schwenkbar am Körper des Handbremshebels 3 angelenkt und vermittels einer Anschlaganordnung in der dem Lösen der Handbremse zugeordneten Schwenkrichtung selbsttätig und starr miteinander koppelbar. In der Ausführungsform nach Figur 3 ist an dem dem Eingriffszahn 65 gegenüberliegenden Hebelarm der als doppelarmiger Hebel ausgeführten zweiten Feststellklinkenhälfte 640 eine Nase 641 ausgebildet und der allgemeinen Ebene dieser Feststellklinkenhälfte gegenüber seitlich versetzt angeordnet. Der Nase 641 ist eine an der als einarmiger Hebel ausgebildeten Feststellklinkenhälfte 610 komplementär seitlich versetzt angeordnete Anschlagfläche 611 zugeordnet. Bei der in der Figur 4 dargestellten Ausführungsform an dem dem Eingriffszahn 65 gegenüberliegenden Hebelarm der als doppelarmiger Hebel ausgeführten zweiten Feststellklinkenhälfte 640 eine deren allgemeiner Längserstreckung gegenüber seitlich versetzte Anschlagfläche 642 ausgebildet, welcher eine an der als einarmiger Hebel ausgebildeten Feststellklinkenhälfte 610 komplementär angeordnete Nase 612 zugeordnet ist.
Aus den Darstellungen der Figuren 3 und 4 ist weiter ersichtlich, daß die der zweiten Feststellklinkenhälfte 640 zugeordnete Belastungsfeder durch eine am Handbremshebel 3 abgestützte Blattfeder 697 gebildert ist.

## Patentansprüche

1. Seilzug-Handbremse für ein Kraftfahrzeug, umfassend
einen an einem an der Fahrzeugkarosserie befestigten Brückenträger (2) angelenkten Handbremshebel (3);
ein Bremsseil (28), das entsprechend der Betätigung des Handbremshebels (3) spannbar ist, und
eine aus einem am feststehenden Brückenträger (2) angeordneten Zahnsegment (5) und einer am Handbremshebel (3) angeordneten, mittels eines Druckknopfes (10) und einem nachgeschalteten Gestänge (7) auslösbaren Feststellklinke (6) bestehenden Feststelleinrichtung, wobei die Feststellklinke (6) von einer Druckfeder (8) entgegen der Auslöserichtung beaufschlagt ist
dadurch gekennzeichnet,
daß die Feststellklinke (6) zweiteilig ausgebildet ist und eine erste Feststellklinkenhälfte (61; 610) und eine zweite Feststellklinkenhälfte (64; 640) umfaßt,
daß die beiden Feststellklinkenhälften (61, 64; 610, 640) um eine gemeinsame Achse (66; 660) schwenkbar am Handbremshebel (3) angelenkt sind,
daß die zweite Feststellklinkenhälfte (64; 640) in Einrückrichtung durch eine Feder (693; 697) federbelastet ist, die gegenüber der an der ersten Feststellklinkenhälfte (61; 610) angreifenden Druckfeder (8) von einer verhältnismäßig schwachen Federlast (693; 697) beaufschlagt, und
daß die zweite Feststellklinkenhälfte (64; 640) von der ersten Feststellklinkenhälfte (61; 610) bei Betätigung in Auslöserichtung aufgrund einer mechanischen Mitnahmeeinrichtung verbindbar ist.

2. Seilzug-Handbremse nach Anspruch 1, dadurch gekennzeichnet, daß die erste Feststellklinkenhälfte (61; 610) bleibend mit einer als einteiliges geradliniges Gestängeteil (7) ausgebildeten, innerhalb des Handbremshebels (3) axial verschieblich geführten sowie starr mit dem Druckknopf (10) verbundenen Schubstange (71) gekoppelt ist.

3. Seilzug-Handbremse nach Anspruch 2, dadurch gekennzeichnet, daß die Schubstange (71) und der Druckknopf (10) ständig mit der Last einer am Handbremshebel (3) abgestützten und in Löserichtung wirkenden Druckfeder (8) beaufschlagt sind.

4. Seilzug-Handbremse nach einem der Ansprüche 1 bis 3, dadurch gekennzeichnet, daß am freien Ende der zweiten Feststellklinkenhälfte (64; 640) ein Eingriffzahn (65) ausgebildet ist, über welchen die zweite Feststellklinkenhälfte (64; 640) mit dem feststehenden Zahnsegment (5) zusammenwirkt.

5. Seilzug-Handbremse nach einem der Ansprüche 1 bis 4, dadurch gekennzeichnet, daß die die zweite Feststellklinkenhälfte (64) beaufschlagende Feder (693; 697) gegen den Handbremshebel (3) abgestützt ist.

6. Seilzug-Handbremse nach einem der Ansprüche 1 bis 5, dadurch gekennzeichnet, daß die beiden Feststellklinkenhälften (61, 64; 610; 640) in Löserichtung vermittels eines an einer Feststellklinkenhälfte (61; 64; 610; 640) angeordneten Mitnehmers (691; 612; 641) starr miteinander koppelbar sind.

7. Seilzug-Handbremse nach einem der Ansprüche 1 bis 6, dadurch gekennzeichnet, daß die erste Feststellklinkenhälfte (61) im Bereich ihrer Lagerung (66) mit einer axial gerichteten, zur Anlenkachse (66) konzentrischen Vertiefung (67) versehen ist und die zweite Feststellklinkenhälfte (64) über einen zur Anlenkachse (66) konzentrisch kreisrund gestalteten Kopfteil (68) in dieser Vertiefung (67) einliegend angeordnet ist.

8. Seilzug-Handbremse nach einem der Ansprüche 1 bis 7, dadurch gekennzeichnet, daß die beiden Feststellklinkenhälften (61, 64) im Bereich ihrer Lagerung (66) eine geringere Materialdicke aufweisen.

9. Seilzug-Handbremse nach einem der Ansprüche 1 bis 8, dadurch gekennzeichnet, daß die erste Feststellklinkenhälfte (61) als doppelarmiger Hebel ausgebildet und der an der ersten Feststellklinkenhälfte (61) angeordnete Mitnehmer durch eine am freien Hebelarm (69) der ersten Feststellklinkenhälfte (691) angeordnete, parallel zu ihrer Anlenkachse (66) vorspringende Nase (691) gebildet ist, und daß die zweite Feststellklinkenhälfte (64) mit einer der Nase (691) der ersten Feststellklinkenhälfte (61) zugeordneten Rastausnehmung (692) versehen ist.

10. Seilzug-Handbremse nach einem der Ansprüche 1 bis 8, dadurch gekennzeichnet, daß die erste Feststellklinkenhälfte (610) als einarmiger Hebel und die zweite Feststellklinkenhälfte (640) als doppelarmiger Hebel ausgebildet sind, wobei ein an einer der Feststellklinkenhälften (610, 640) angeordnete Mitnehmer (612; 641) durch eine seiner allgemeinen Ebene gegenüber seitlich versetzt angeordnete Nase (612; 641) gebildet ist und mit einem an der anderen Feststellklinkenhälfte (640, 610) komplementär angeordneten Anschlag (611; 642) zusammenwirkt.

11. Seilzug-Handbremse nach einem der Ansprüche 1 bis 10, dadurch gekennzeichnet, daß beide Feststellklinkenhälften (61, 64; 610, 640) als Blechpressteile ausgebildet sind.

12. Seilzug-Handbremse nach einem der Ansprüche 1 bis 10, dadurch gekennzeichnet, daß wenigstens eine der beiden Feststellklinkenhälften (61, 64; 610, 640) als Formteile ausgebildet ist.

13. Seilzug-Handbremse nach einem der Ansprüche 1 bis 12, dadurch gekennzeichnet, daß das Bremsseil (28) über eine mit einer Federlast (22) beaufschlagte, teilweise umfangsverzahnte Mitnehmerscheibe (4), die vermittels eines Kipphebels und einer in Abhängigkeit vom Anzugsweg des Handbremshebels (3) umsteuerbaren Mitnehmerklinke (12) mit dem Handbremshebel (3) koppelbar ist, mit dem Handbremshebel (3) bei dessen Betätigung verbindbar ist.

## Claims

1. Cable pull handbrake for a vehicle comprising a handbrake lever (3) linked to a bridge support (2) fastened to the vehicle body; a brake cable (28) which can be tensioned according to the actuation of the handbrake lever (3) and a locking device consisting of a tooth segment (5) arranged on a fixed bridge support (2) and a locking pawl (6) arranged on the handbrake lever (3) and releasable by means of a pushbutton (10) and a downstream linkage, wherein the locking pawl (6) is applied in the opposite direction to the release direction by a compression spring (8), characterised in that the locking pawl (6) is designed in two parts and comprises a first locking pawl half (61; 610) and a second locking pawl half (64; 640), in that the two locking pawl halves (61, 64; 610, 640) are pivotally linked on the handbrake lever (3) round a common axis (66; 660), in that the second locking pawl half (64; 640) is spring-loaded in the engagement direction by a spring (693; 697) which, compared to the compression spring (8) acting on the first locking pawl half (61; 610), is applied with a relatively weak spring load and in that the second locking pawl half (64; 640) can be connected by the first locking pawl half (61; 610) when actuated in the release direction due to a mechanical driving device.

2. Cable pull handbrake according to claim 1, characterised in that the first locking pawl half (61; 610) is durably coupled to a piston rod (71) designed as a one-part straight linkage part (7) guided axially displaceably inside the handbrake lever (3) and rigidly connected to the pushbutton (10).

3. Cable pull handbrake according to claim 2, characterised in that the piston rod (71) and the pushbutton (10) are constantly applied with the load of a compression spring (8) supported on the handbrake lever (3) and acting in the release direction.

4. Cable pull handbrake according to one of claims 1 to 3, characterised in that an engagement tooth (65) is formed on the free end of the second locking pawl half (64; 640), via which engagement tooth (65) the second locking pawl half (64; 640) cooperates with the fixed tooth segment (5).

5. Cable pull handbrake according to one of claims 1 to 4, characterised in that the spring (693; 697) applying the second locking pawl half (64) is supported against the handbrake lever (3).

6. Cable pull handbrake according to one of claims 1 to 5, characterised in that the two locking pawl halves (61, 64; 610; 640) can be rigidly coupled to one another in the release direction by means of a driver (691; 612; 641) arranged on a locking pawl half (61; 64; 610; 640).

7. Cable pull handbrake according to one of claims 1 to 6, characterised in that the first locking pawl half (61) is provided in the region of its mounting (66) with an axially directed recess (67) concentric to the linking axis (66) and the second locking pawl half (64) is arranged in this recess (67) via a circular head part (68) designed concentrically to the linking axis (66).

8. Cable pull handbrake according to one of claims 1 to 7, characterised in that the two locking pawl halves (61, 64) have less material thickness in the region of their mounting (66).

9. Cable pull handbrake according to one of claims 1 to 8, characterised in that the first locking pawl half (61) is designed as a double-armed lever and the driver arranged on the first locking pawl half (61) is formed by a nose (691) projecting parallel to its linking axis (66) and arranged on the free lever arm (69) of the first locking pawl half (691) and in that the second locking pawl half (64) is provided with a latching recess (692) associated with the nose (691) of the first locking pawl half (61).

10. Cable pull handbrake according to one of claims 1 to 8, characterised in that the first locking pawl half (610) is designed as a one-armed lever and the second locking pawl half (640) is designed as a double-armed lever, wherein a driver (612; 641) arranged on one of the locking pawl halves (610, 640) is formed by a nose (612; 641) arranged laterally offset to the common plane thereof and cooperates with a stop (611; 642) arranged in a complementary manner on the other locking pawl half (640, 610).

11. Cable pull handbrake according to one of claims 1 to 10, characterised in that the two locking pawl halves (61, 64; 610, 640) are designed as sheet metal moulded parts.

12. Cable pull handbrake according to one of claims 1 to 10, characterised in that at least one of the two locking pawl halves (61, 64; 610, 640) is designed as moulded parts.

13. Cable pull handbrake according to one of claims 1 to 12, characterised in that the brake cable (28) can be connected to the handbrake lever (3) when the latter is actuated by a partially peripherally-toothed driving disc (4) applied with a spring load (22), which driving disc (4) can be coupled to the handbrake lever (3) by means of a rocker and a driving pawl (12) which can be controlled as a function of the application path of the handbrake lever (3).

## Revendications

1. Frein à main à câble pour un véhicule, comprenant
un levier de frein à main **(3)** articulé sur un longeron **(2)** fixé à la carrosserie du véhicule,
un câble de freinage **(28)** qui peut être tendu conformément à la manoeuvre du levier de frein à main **(3)**, et
un dispositif de verrouillage composé d'un segment denté **(5)** placé sur le longeron fixe **(2)** et d'un cliquet de verrouillage **(6)** placé sur le levier de frein à main **(3)** et libérable au moyen d'un bouton poussoir **(10)** et d'une tringlerie **(7)** placée à la suite, le cliquet de verrouillage **(6)** étant chargé par un ressort de compression **(8)** dans le sens inverse à la direction de libération,
caractérisé en ce que
le cliquet de verrouillage **(6)** est conformé en deux parties et comprend une première moitié de cliquet de verrouillage **(61 ; 610)** et une deuxième moitié de cliquet de verrouillage **(64 ; 640)**,
en ce que les deux moitiés de cliquet de verrouillage **(61, 64 ; 610, 640)** sont articulés sur le levier de frein à main **(3)** de manière pivotante autour d'un axe commun **(66 ; 660)**,
en ce que la deuxième moitié de cliquet de verrouillage **(64 ; 640)** est chargée dans la direction de retrait par un ressort **(693 ; 697)** qui. applique une force de ressort **(693 ; 697)** relativement faible par rapport à celle du ressort de compression **(8)** agissant sur la première moitié de cliquet de verrouillage **(61 ; 610)**, et
en ce que la deuxième moitié de cliquet de verrouillage **(64 ; 640)** peut être reliée à la première moitié de cliquet de verrouillage **(61 ; 610)** en cas d'action dans la direction de libération en raison d'un dispositif d'entraînement mécanique.

2. Frein à main à câble selon la revendication **1**, caractérisé en ce que la première moitié de cliquet de verrouillage **(61 ; 610)** est couplée de manière permanente à une tige de poussée **(71)** conformée en partie de tringlerie **(7)** rectiligne d'un seul tenant, guidée de manière axiale dans le levier de frein à main **(3)** et reliée de manière rigide au bouton poussoir **(10).**

3. Frein à main à câble selon la revendication **2**, caractérisé en ce que la tige de poussée **(71)** est le bouton poussoir **(10)** sont exposés en permanence à la charge d'un ressort de compression **(8)** appuyé contre le levier de frein à main **(3)** et agissant dans la direction de libération.

4. Frein à main à câble selon l'une des revendications **1** à **3**, caractérisé en ce qu'à l'extrémité libre de la deuxième moitié de cliquet de verrouillage **(64 ; 640)** est formée une dent de prise **(65)**, par l'intermédiaire de laquelle la deuxième moitié de cliquet de verrouillage **(64 ; 640)** coopère avec le segment denté fixe **(5)**.

5. Frein à main à câble selon l'une des revendications **1** à **4**, caractérisé en ce que le ressort **(693 ; 697)** agissant sur la deuxième moitié de cliquet de verrouillage **(64)** s'appuie contre le levier de frein à main **(3)**.

6. Frein à main à câble selon l'une des revendications **1** à **5**, caractérisé en ce que les deux moitiés de cliquet de verrouillage **(61 ; 64 ; 610 ; 640)** peuvent être couplées de manière rigide l'une à l'autre au moyen d'un entraîneur **(691 ; 612 ; 641)** placé sur une moitié de cliquet de verrouillage **(61 ; 64 ; 610 ; 640)**.

7. Frein à main à câble selon l'une des revendications **1** à **6**, caractérisé en ce que la première moitié de cliquet de verrouillage **(61)** est muni, au niveau de son appui **(66)**, d'un renfoncement **(67)** d'orientation axiale concentrique à l'axe d'articulation (**66)**, et la deuxième moitié de cliquet de verrouillage **(64)** est insérée dans ce renfoncement **(67)** par l'intermédiaire d'une partie de tête **(68)** de forme circulaire concentrique à l'axe d'articulation **(66)**.

8. Frein à main à câble selon l'une des revendications **1** à **7**, caractérisé en ce que les deux moitiés de cliquet de verrouillage **(61, 64)** présentent une moindre épaisseur de matière au niveau de leur appui **(66)**.

9. Frein à main à câble selon l'une des revendications **1** à **8**, caractérisé en ce que la première moitié de cliquet de verrouillage **(61)** est conformée en levier à deux bras et l'entraîneur placé sur la première moitié de cliquet de verrouillage **(61)** est formé par un bec **(691)** en saillie parallèlement à son axe d'articulation **(66)** et placé sur le bras de levier **(69)** libre de la première moitié de cliquet de verrouillage **(691)**, et en ce que la deuxième moitié de cliquet de verrouillage **(64)** est munie d'un évidement d'encliquetage **(692)** associé au bec **(691)** de la première moitié de cliquet de verrouillage **(61)**.

10. Frein à main à câble selon l'une des revendications **1** à **8**, caractérisé en ce que la première moitié de cliquet de verrouillage **(610)** est conformée en levier à un bras et la deuxième moitié de cliquet de verrouillage **(640)** est conformée en levier à deux bras, un entraîneur **(612 ; 641)** placé sur l'une des moitiés de cliquet de verrouillage **(610, 640)** étant formé par un bec **(612 ; 641)** décalé latéralement par rapport à son plan général et coopérant avec une butée **(611 ; 642)** placée de manière complémentaire sur l'autre moitié de cliquet de verrouillage **(640, 610)**.

11. Frein à main à câble selon l'une des revendications **1** à **10**, caractérisé en ce que les deux moitiés de cliquet de verrouillage **(61, 64 ; 610, 640)** sont formées en tôle estampée.

12. Frein à main à câble selon l'une des revendications **1** à **10**, caractérisé en ce que l'une au moins des deux moitiés de cliquet de verrouillage **(61, 64 ; 610, 640)** est conformée en pièce moulée.

13. Frein à main à câble selon l'une des revendications **1** à **12**, caractérisé en ce que le câble de freinage **(28)** peut être mis en liaison avec le levier de frein à main **(3)** lors de la manoeuvre de celui-ci par l'intermédiaire d'un disque entraîneur **(4)** partiellement denté sur sa circonférence et exposé à une charge de ressort **(22)**, disque qui peut être couplé au levier de frein à main **(3)** au moyen d'un levier basculant et l'un cliquet entraîneur **(12)** commutable en fonction de la course de serrage du levier de frein à main **(3)**.
